# EUROPEAN PATENT APPLICATION

(11) **EP 2 246 188 A1**
(43) Date of publication of application: **03.11.2010**
(21) Application number: 08736680.3
(22) Date of filing: 14.02.2008
(51) Int. Cl.: B32B 27/06, B44C 5/04, E04F 15/10

(54) **PREFABRICATED MODULAR LAMINATE ELEMENT FOR FLOORS**

(71) Applicant: Floover World, S.l., 08770 Sant Sadurní D'anoia (ES)
(72) Inventor: FERRER SAYOL, Juan, E-08770 Sant Sadurní D'anoia (ES); PRATI, Andrea, E-08770 Sant Sadurní D'anoia (ES)
(74) Representative: Ponti Sales, Adelaida
(86) International application number: PCT/ES2008/000076
(87) International publication number: WO 2009/101217

(57) **Abstract**

Laminated prefabricated modular element for floors, comprising a transparent resistance layer, a decorative layer (1), a sheet of high-density fiberboard (2) and a counterbalance layer (3), and a layer of compact heterogeneous vinyl (4) placed between the decorative layer and the high-density fiberboard layer, which enhances greatly the commodity when it is stepped, permitting a greater depth of the decorative line, and more resistance against objects with sharp edges that can fall, and it permits to obtain perfect joints with the contiguous elements, and it also behaves so much better against contraction and expansion, which permits to cover great surfaces of floor without placing expansion joints.

## Description

The invention refers to a laminated prefabricated element for floors, which offers enhanced elastic, acoustic and thermal features.

### BACKGROUND OF THE INVENTION

Laminated prefabricated modular elements for floors are known, usually called "laminated paving", whose structure comprises, from the top to the bottom once placed in position, the following layers:
- a transparent resistance layer or "overlay" made from synthetic resins, provided to resist, on one hand, the wear of the passable layer by the people, and that constitutes the free layer of the paving once placed in position, and on the other hand, provided to protect the decorative layer, described hereinafter, from the UV rays;
- a decorative layer, also called photographic paper or "decor", only for esthetic ends, and that the most commercial models have a wood-effect, even though other kinds of designs are increasingly more popular;
- a high density fiberboard layer (or HDF), whose high density permits a double structural function, on one hand, it resists the step or weight compression which the element supports and, on the other hand, it supports, by the edges, the joining click system with the contiguous elements; and
- a counterbalance layer, named like that because it has the aim of preventing the deformation of the modular element, which tends to be bent upwardly, and for this reason this layer works in traction. It is usually made from a plasticized material.

The described structure, even though it has a good performance that makes it very demanded, has as limitation its reduced elasticity, because the structural work falls on the high density fiberboard, which makes it specially hard and confers it a not pleasant loud response when it is stepped, which makes this floor to be associated easily with a medium or low quality environment. This drawback makes it not very versatile for its application in environments in which a more pleasant environment is sought, such as e.g. in domestic applications or in working places in which it is desired to optimize the acoustic environment and the comfort.

Another drawbacks of this kind of structure are the following:
- Its elasticity is enough to resist the wear, but it does not resist impacts produced by falling objects with sharp edges.
- Its dilatation coefficient supposes a limitation on its installation from surfaces about 30 m², surfaces from which it is necessary to place dilatation joints.
- Furthermore, as this kind of paving is very rigid, the joints are not perfect, which permits the entrance of dirt through the joints, and finally leads to a long-term deterioration of the paving.
- The counterbalance layer has the counterbalancing as the only function, not offering thermal properties, neither acoustic nor adaptation to the unevenness.
- It has lack of warmth, because of its rigidity, which provides a somewhat cold character.

On the other hand, it is also known the application of vinyl for coating floors, specially in places with a great passage. This application is carried out applying directly glue to a sheet, provided in rolls, which is glued directly to the floor.

The vinyl has good features of resistance and elasticity, but its direct application in floors presents the following drawbacks:
- Its application is no reversible, because it must be fixed by gluing.
- The balancing of the resulting floor depends greatly on the unevenness of the floor to which the vinyl roll is applied, feature which forces to apply balancing or smoothing fillers at the surface to level the unevenness of the floor where the material is installed, making it not advantageous for floors, because other products must be involved and because of the specialized labor before the vinyl installation.
- Its thermal and acoustic features are limited by the vinyl properties.
- The vinyl cannot be replaced nor repaired easily, and it cannot be changed to another space, because it is not detachable.
- The installation of the vinyl requires specialized labor, tools and professional machinery.
Therefore, the applicant has realized the necessity of providing a laminated prefabricated element for floors avoiding said drawbacks of the state of the art, combining in a synergic way the advantages of the systems currently available that have been described.

### DESCRIPTION OF THE INVENTION

To this end, the present invention provides a laminated prefabricated modular element for floors, comprising, from the top to the bottom once placed, a transparent resistance layer, a decorative layer, a high-density fiberboard sheet and a counterbalance layer, and it is **characterized in that** it also comprises a layer of compact heterogeneous vinyl placed between the decorative layer and the high-density fiberboard layer.

This interposed layer of compact vinyl, because of its elastic features, enhances greatly the comfort when it is stepped, and even its sonority, so that it is specially adapted for spaces in which a more comfortable environment is sought.

Furthermore, the thickness of this layer permits a deeper decorative line, which offers more decorative possibilities, such as ceramics, stone, cement, metals, leather, glass, color, etc.

Another advantage with respect to the laminated paving of the state of the art is its capacity to resist when objects with sharp edges fall on it, thanks to its greater elasticity.

Another additional feature that makes advantageous this vinyl layer is that as the three first layers can be made from vinyl, the resistance layer, the decorative layer and the interposed vinyl layer, it is possible to join them by a thermal process, preventing the use of glues.

And even an additional advantage is that its elasticity permits to obtain perfect joints with the contiguous elements, and it has a better performance against contraction and expansion, which permits to cover up to 200 m² of floor without expansion joints.

Preferably, the counterbalance layer is made from cork chipboard, that is a material with good mechanical features to prevent the bulging or folding of the elements, and it also presents a good thermal and acoustic isolation.

Advantageously, the layer of heterogeneous vinyl has a thickness of about 2, 2.5 or 3 mm, according to the resistance to abrasion needed for the product. Furthermore, this thickness is suitable to provide the desired elasticity, and it is reduced enough not increasing excessively the thickness of the element.

More preferably, the high-density fiberboard sheet has a thickness of about 6 mm, which is enough to provide to the element the suitable rigidity and resistance.
Finally, the cork sheet has a thickness of about 2 mm, enough to withstand the counterbalance traction and to enhance greatly the acoustic and thermal features of the element.

### BRIEF DESCRIPTION OF THE DRAWINGS

For a better understanding of what has been described, some drawings are attached in which, diagrammatically and only as a non limitative example, a practical case of embodiment of the element of the invention is shown.
Fig. 1 is a cross-section of a laminated paving of the state of the art, whose structure is high-density fiberboard.
Fig. 2 is a cross-section of the laminated prefabricated modular element for floors object of the invention.

### DESCRIPTION OF PREFERRED EMBODIMENTS

Hereinafter and with reference to the attached drawings, an element of the state of the art and an element according to the invention will be described.

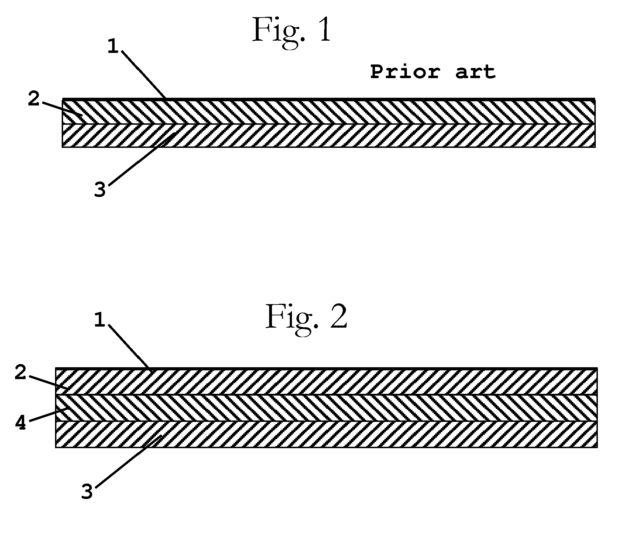

As it can be seen in Fig. 1, a laminated prefabricated modular element for floors of the state of the art comprises a transparent resistance layer (provided to protect from moisture, scratches and UV rays the subsequent layer), a decorative layer 1, a high-density fiberboard sheet 2 and a counterbalance layer 3. Because of its reduced thickness (typically about fractions of millimeter, such as e.g. about 0.2-0.3 mm) with respect to the other material layers, these two layers have been shown as a single layer 1.

The resistance and counterbalance layers have a very reduced thickness, in the elements of the state of the art, with respect to the intermediate main layer, which is made from high-density fiberboard (HDF).

Therefore, the elastic features of an element of this kind are determined mainly by the own elasticity of the HDF, that is very low. The result is that the step, both from the point of view of the restoration or elasticity, and of the sound quality, is very characteristic of this kind of elements, and more specifically, it provides a hard and loud step.

On the contrary, as it can be seen from Fig. 2, the element of the invention includes between the second decorative layer 1 and the high-density fiberboard sheet 2 a layer of compact heterogeneous vinyl 4, which provides to the element optimal elasticity features permitting to provide the floors a greater comfort when it is stepped and a better acoustic comfort.

This vinyl layer can be made from recycled vinyl or not, and a preferable thickness in about 2 mm, suitable to obtain said optimal elasticity for step it.

In this preferred embodiment, the counterbalance layer is made from cork chipboard, which provides the counterbalance function, and also enhances the acoustic isolation features, from a point of view of intensity and also reverberation, and thermal of the element.

## Claims

1. Laminated prefabricated modular element for floors, comprising a transparent resistance layer, a second decorative layer (1), a high-density fiberboard sheet (2) and a counterbalance layer (3), **characterized in that** it also comprises a layer of compact heterogeneous vinyl (4) placed between said second decorative layer (1) and said high-density fiberboard sheet (2).

2. Element according to claim 1, **characterized in that** the counterbalance layer (3) is made from cork chipboard.

3. Element according to claim 1, **characterized in that** the heterogeneous vinyl layer (4) has a thickness of about 2 mm.

4. Element according to claim 1, **characterized in that** the high-density fiberboard sheet (2) has a thickness of about 6 mm.

5. Element according to claim 2, **characterized in that** said cork sheet (3) has a thickness of about 2 mm.

6. Element according to claim 1, **characterized in that** said transparent resistance layer and said decorative layer are made from vinyl.
